# EUROPEAN PATENT SPECIFICATION

(11) **EP 3 012 505 B1**
(45) Date of publication and mention of the grant of the patent: **10.07.2019**
(21) Application number: 15466012.0
(22) Date of filing: 20.10.2015
(51) Int. Cl.: F16N 7/36, F16N 39/06, E01C 19/28, F16N 9/02

(54) **VIBRATING ROLLER**
RÜTTELWALZE
ROULEAU VIBRANT

(30) Priority: 22.10.2014 CZ 20140723
(43) Date of publication of application: 27.04.2016
(73) Proprietor: Ammann Czech Republic a.s., 549 01 Nové Mesto nad Metuji (CZ)
(72) Inventor: Bohumil, Jirman, 549 01 Nové M?sto nad Metují (CZ)
(74) Representative: Skoda, Milan

(56) References cited:
- CN-Y- 201 180 249
- JP-A- S5 594 092
- US-A- 3 721 129

## Description

### Technical Field

The invention relates to the vibrating roller of a construction machine, specifically to the lubrication of its bearings.

### State of the Art

Numerous design solutions for the vibrating rollers of construction machinery are currently known. Most of these designs comprise bearing arrangements mounted inside the vibrating roller, which are lubricated and cooled due to high stress.

From patent document CS 115383 a vibrating roller is known, whose drum bearings are lubricated by being bathed directly in the oil tank. Oil is conveyed and discharged through openings on fixed axles in the rotating drum, the bearings passing the outside ends of the fixed axis.

Engine or transmission oil is mostly used to lubricate the bearings, which has a limited lifespan. Oil in a vibrating roller is degraded through heat and pressure stress and loses its lubricating ability very rapidly. More expensive synthetic oils are used to extend the intervals between oil changes and to increase bearing life, which partially resolves this condition. Oils, however, must still be changed at regular intervals due to contamination by mechanical and other particles which enter into the oil from the bearings and seals and are released from the uneven interior of the reel drum. Currently, the replacement time set by manufacturers is a maximum of 2000 hours, although synthetic oils even keep good lubricating ability up to 8000 hours.

In addition, from patent documents CN 2433295 and CN 2201620342 vibrating rollers are known which comprise a lubricating system with circulating oil, and where the system includes a filter. These systems, however, are structurally relatively complicated and also very demanding on maintenance.

Furthermore the document CN201180249Y describes a vibrating roller according to the preamble of claim 1.

From the above cited state-of-the-art it is apparent that the major disadvantage of current technology that it is no design is known which would resolve the issue of oil contaminated by mechanical and other particles in an easy and maintenance-free way, and which would allow for utilising the complete life of synthetic oils.

The aim of the invention is the construction of a vibrating roller with a cleaner wherein lubricant and coolant oils are used, thereby increasing oil life and extending the interval for its replacement.

### Principle of the Invention

These deficiencies are largely eliminated and the objectives of the invention fulfilled by a vibrating roller, specifically a vibrating roller comprising a vibrating drum mounted by means of a damping system in the frame, in which a vibration system is located within the cavity of the vibration drum, which is mounted via at least one bearing in the interior reel of the drum, and where the cavity of the interior reel simultaneously forms a reservoir of lubricating oil used to lubricate the bearings with an oil mist, according to the invention whose principle consists in that it comprises at least one gravitational filtration system of the lubricating oil. The advantage is that oil filtration occurs spontaneously without the use of any supporting means for example, without using a pump. The entire filtration system is virtually maintenance free and also the oil filling is fully functional for the entire life of the construction machine.

The lubricating oil filtration system is, to advantage, mounted in the interior reel, and to greatest advantage a channel is provided in the inner lid of the interior reel. It is to advantage that the lubricating oil filtration system comprises at least one channel connecting the reservoir of lubricating oil to at least one lubricating oil filter, wherein the channel to advantage comprises at least one chamber arranged at the level of the lubricating oil reservoir. Furthermore, it is to advantage that the channel comprises a runner aperture at the mouth to the interior space of the filter which is provided with a drip edge. Only individual parts of the interior reel are modified, thereby not significantly increasing the number of new parts, which has a favourable effect on the cost of the complete construction machine.

It is also to advantage when the lubricating oil filter is attached to the shaft of the uneven counterweights, which is part of the vibrating system.

The theoretical possibility of the filter being clogged is resolved to advantage by the open sides of the filter being provided with perforated walls from which oil can escape from the interior of the filter.

It is to advantage the lubricating oil filter is a micron filter, which allows thorough cleaning of the lubricating oil.

The invention solves the technical problem of it not being technically possible to clean the entire interior space of vibrating rollers, where impurities are even present in the space in which the lubricating oil circulates for lubricating bearings, and so, the longer the oil in this space circulates, the more it catches dirt, and the more it reduces the lifetime of the lubricated bearings.

The main advantage of the structural arrangement of the vibrating roller according to the invention is that it enables the cleaning of the entire contents of the oil reservoir and the oil change interval to be increased to four times the original change time, i.e. up to 8000 hours, which allows the creation of practically maintenance-free vibrating rollers.

### Overview of the Figures

The invention will be explained in more detail by using drawings, in which
Fig. 1 shows a cross-sectional view of the complete arrangement of a vibrating roller, and
Fig. 2 shows a schematic detail of the arrangement of the lubrication oil filtration system.

### Example of the Performance of the Invention

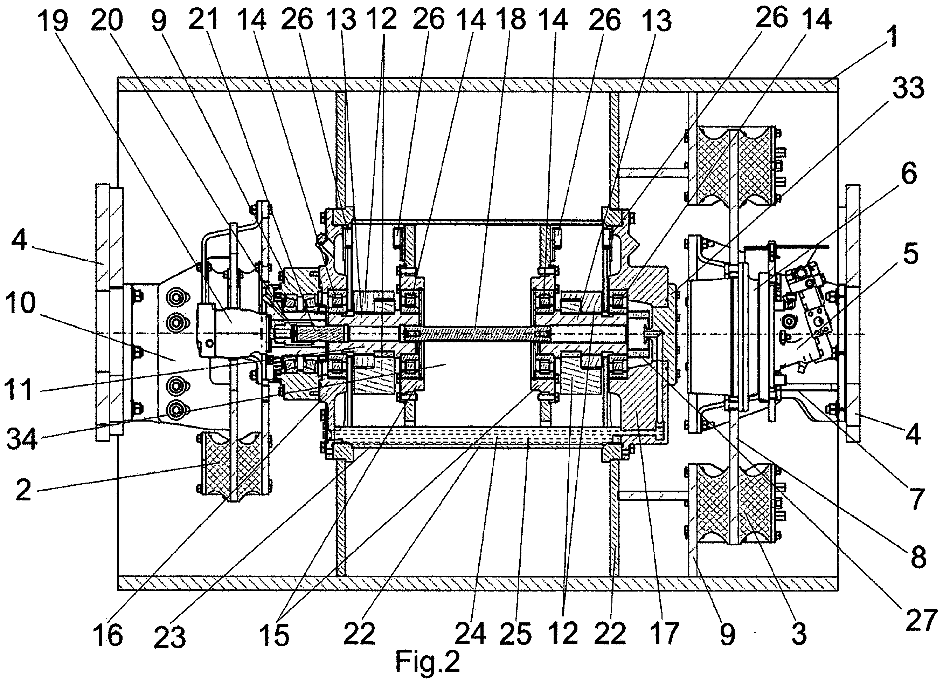

The vibrating roller (Fig. 2) comprising a vibrating drum 1 mounted by means of a damping system 2,3 to the frame 4 of the machine. The drive of the vibration drum 1 is secured by hydrostatic drive. The hydrostatic drive of the vibrating drum 1 consists of a dual-position or proportionally regulated hydraulic motor 5 drive attached to a final planetary gear reducer 6. The reducer 6 is mounted, its non-rotating part, using brackets 7 to the frame 4 of the drum. The power transmission drive of the rotating part of the reducer 6 transmits torque through the carrier plate 8 on the rubber-metals of dampening system 3 and then to the vibrating drum 1. The vibrating drum 1 is mounted on the other side by the bearing housing 9 via the damping system 2, through the vibration bracket 10, to the frame 4 of the machine. The vibrating drum 1 is rotated towards the machine frame 4 in the bearings 14 of the bearing housing 9 and the bearings 14 of the reducer 6.

In the cavity 34 of the vibrating drum 1 is a vibration assembly 11 comprising two sets of unbalanced counterweights 12. The vibration assembly 11 is mounted by means of four bearings 14 in the inner reel 22 of the vibrating drum 1.

The rotating unbalanced counterweights 12 generate uneven centrifugal force which creates the working vibration movement of the vibrating drum 1. The unbalanced counterweights 12 are mounted on the shafts 13 deposed in the bearings 14. The bearings 14 are deposed with their outer rings in the inner cover 15 and outer covers 16, 17. The unbalanced counterweights 12 are connected via a grooved coupling 18. The drive of the vibration is hydrostatic and is provided by a proportional, or dual-position hydraulic motor 19 connected to the unbalanced counterweights 12 by means of grooved couplings 20, 21. The centrifugal force of the unbalanced counterweights 12 is transmitted through the shaft 13, the bearings 14, the inner cover 15 and the outer covers 16, 17, to the inner reel 22 of the drum to the vibrating drum 1.

The inner reel 22 of the vibrating drum 1 comprises an inner tube 23 which serves to transmit the centrifugal force of the unbalanced counterweights 12 of the inner reel 22 of the drum, and with the cavity 34 of the inner reel 22 simultaneously providing a reservoir 24 for the lubricating oil 25 which serves to lubricate the bearings 14 with an oil mist. The bearings 14 of the drum are lubricated and cooled by oil 25, more exactly an oil mist. The oil 25 is discharged using small scoops 26 which pour oil over the rotating shaft 13, giving rise to an oil mist. The inner reel 22 comprises a lid 33.

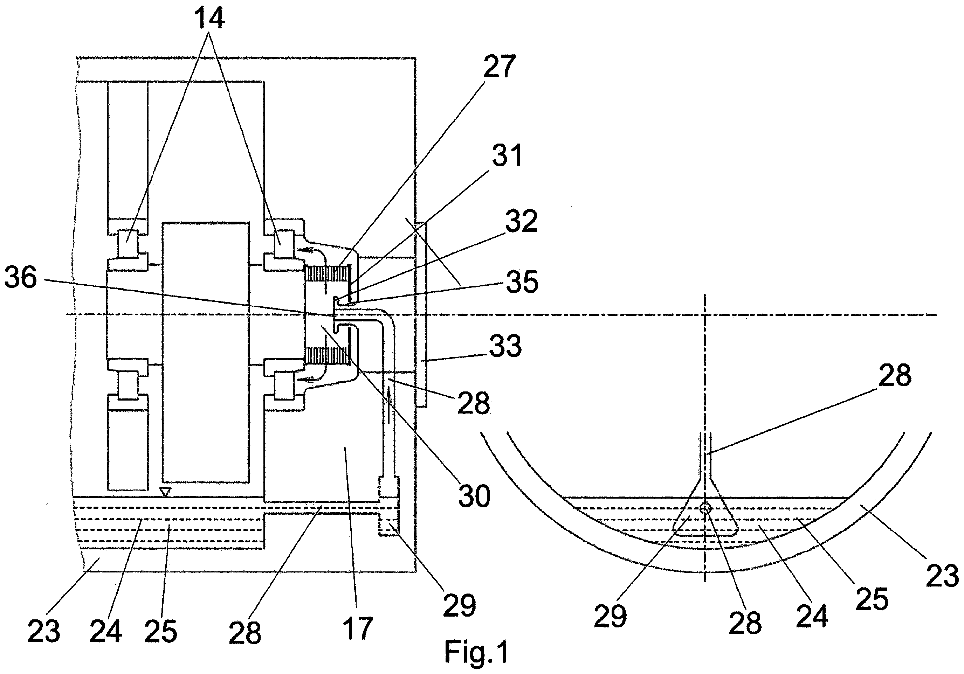

The vibrating roller (Fig. 1, Fig. 2) further comprises a gravitational filtration system for the lubricating oil 25, which is arranged in the inner reel 22.

The filter system for lubricating oil 25 includes multiple channels 28 which connect the reservoir 24 of the lubricating oil 25 with a single filter 27 of the lubricating oil 25. The channels 28 are arranged in the inner cover 15 of the inner reel 22.

Each channel 28 contains a small chamber 29 arranged at the level of the reservoir 24 of lubricating oil 25 which flows into the inner space 30 of the filter 27 at the mouth via a runner aperture 36 which is provided with a drip edge 32.

The filter 27 of the lubricating oil 25 is arranged in the inner reel 22, and is attached to the shaft 13 of the unbalanced counterweights 12, which is part of the vibrating system 11. The open side filter 27 is fitted with a wall 31 with an opening 35. The filter 27 for the lubricating oil 25 is five micron gauge.

The filter 27 for the lubricating oil 25 rotates when the vibration is turned on. The level of oil 25 in the oil reservoir 24, thanks to gravity, always remains at the lowest level. The oil 25, by using hydrostatic pressure, moves due to its own weight and flows via the channels 28 into the small chambers 29. While driving the machine, the vibrating drum 1 rotates and the oil 25 in the small chambers 29 is carried to a higher position and then hydrostatically, again through gravity, is drawn into the next part of the channels 28. From the channels 28, the oil 25 flows through the runner aperture 36 of the drip edge 32, again by means of hydrostatic pressure, which arises by gravity, on into the interior space 30 of the filter 27. The filter 27 is not screwed onto the side towards the shaft 13 equipped with a wall 31 with an opening 35. The wall 31 does not allow oil 25 to drain to the side and the oil 25 is by gravitational and centrifugal forces passed through the filter 27 and filtered. The filtered oil is used to lubricate and cool the bearings 14 and then, flows purified back into the reservoir 24.

In case of clogging of the filter 27 the assembly is equipped with a bypass formed by an opening 35 in the outer wall 31 of the filter 27. The filter 27 can be replaced after removing the lid 33.

### Industrial Application

The vibrating roller according to the invention can be used in construction machines.

### List of Reference Marks

- 1: vibrating drum
- 2: damping system I
- 3: damping system II
- 4: frame
- 5: hydraulic motor I
- 6: reducer
- 7: drive bracket
- 8: carrier plate
- 9: bearing housing
- 10: vibration bracket
- 11: vibration assembly
- 12: unbalanced counterweights
- 13: shaft
- 14: bearing
- 15: inner cover
- 16: outer cover I
- 17: outer cover II
- 18: grooved coupling I
- 19: hydraulic motor II
- 20: grooved coupling II
- 21: grooved coupling III
- 22: inner reel
- 23: inner tube
- 24: reservoir
- 25: lubricating oil
- 26: small scoop
- 27: filter
- 28: channel
- 29: small chamber
- 30: inner space
- 31: wall
- 32: drip edge
- 33: lid
- 34: cavity
- 35: opening
- 36: runner aperture

## Claims

1. A vibrating roller, specifically a vibrating roller containing a vibrating drum (1) mounted by means of a damping system (2,3) in the frame (4), wherein the cavity (34) of the vibrating drum (1) is arranged a vibrating assembly (11) which is mounted by means of at least one bearing (14) in the inner reel (22) of the drum (1), when the cavity (34) of the inner reel (22) simultaneously forms the reservoir (24) of the lubricating oil (25) serving to lubricate the bearings (14) with an oil mist, **characterised by that** it comprises at least one gravitational filtration system of the lubricating oil (25).

2. The vibrating roller according to claim 1, **characterised by that** the filtration system of the lubricating oil (25) is arranged in the inner reel (22).

3. The vibrating roller according to either one of the preceding claims, **characterised by that** the filtration system of the lubricating oil (25) comprises at least one channel (28) connecting the reservoir (24) of the lubricating oil (25) with at least one filter (27) of the lubricating oil (25).

4. The vibrating roller according to claim 3, **characterised by that** the channel (28) comprises at the mouth into the interior space (30) of the filter (27) a runner aperture (36), which is provided with a drip edge (32).

5. The vibrating roller according to either one of claims 3 and 4, **characterised by that** that the filter (27) of the lubricating oil (25) is attached to the shaft (13) of the unbalanced counterweights (12) which is part of the vibration assembly (11).

6. The vibrating roller according to any of the claims 3 to 5, **characterised by that** the channel (28) comprises at least one small chamber (29) arranged at the level of the reservoir (24) of the lubricating oil (25).

7. The vibrating roller according to any of the claims 3 to 6, **characterised by that** the channel (28) is provided in the inner cover (15) of the inner reel (22).

8. The vibrating roller according to any of the claims 3 to 7, **characterised by that** the open side of the filter (27) is provided with a wall (31) with an opening (35).

9. The vibrating roller according to any of the claims 3 to 8, **characterised by that** the filter (27) of the lubricating oil (25) is of micron gauge.

## Patentansprüche

1. Vibrationswalze, insbesondere die Vibrationswalze, die einen Vibrationsläufer (1) enthält, gelagert mittels eines Dämpfungssystems (2,3) in einem Rahmen (4), wo im Hohlraum (34) des Vibrationsläufers (1) das Vibrationssystem (11) angeordnet wird, welches mit Hilfe von mindestens eines Lagers (14) in einer inneren Spule (22) des Läufers (1) eingebaut ist, wobei der Hohlraum (34) der inneren Spule (22) zugleich einen Behälter (24) für das Schmieröl (25) für die Lagerschmierung (14) mit dem Ölnebel bildet, **ist dadurch gekennzeichnet, dass** sie mindestens ein Schmierölgravitationsfiltrationssystem enthält (25).

2. Die Vibrationswalze nach Forderung 1, **ist dadurch gekennzeichnet, dass** das Filtrationssystem des Schmieröls (25) in einer inneren Spule (22) angeordnet wird.

3. Die Vibrationswalze nach einer der vorherigen Forderungen, **ist dadurch gekennzeichnet, dass** das Filtrationssystem des Schmieröls (25) mindestens einen Kanal (28) enthält, der den Behälter (24) des Schmieröls (25) mit mindestens einem Filter (27) des Schmieröls (25), verbindet.

4. Die Vibrationswalze nach Forderung 3, **ist dadurch gekennzeichnet, dass** der Kanal (28) an der Mündung in den Inneren Raum (30) des Filters (27) eine Einflussöffnung (36) enthält, die mit einem Abtropfkante (32) versehen ist.

5. Die Vibrationswalze nach einer der Forderungen 3 und 4, **ist dadurch gekennzeichnet, dass** der Filter (27) des Schmieröls (25) an der Welle (13) von Unwuchten (12), die Bestandteil des Vibrationssystems (11) bilden, verhackt wird.

6. Die Vibrationswalze nach einer der Forderungen 3 bis 5, **ist dadurch gekennzeichnet, dass** der Kanal (28) mindestens eine Kammer (29) enthält, die in der Höhe des Behälters (24) für das Schmieröl (25) angebracht wird.

7. Die Vibrationswalze nach einer der Forderungen 3 bis 6, **ist dadurch gekennzeichnet, dass** der Kanal (28) in der inneren Kappe (15) der inneren Spule (22) angebracht ist.

8. Die Vibrationswalze nach einer der Forderungen 3 bis 7, **ist dadurch gekennzeichnet, dass** die freie Seite des Filters (27) mit einer Wand (31) mit Öffnung (35) versehen ist.

9. Die Vibrationswalze nach einer der Forderungen 3 bis 8, **ist dadurch gekennzeichnet, dass** der Filter (27) des Schmieröls (25) ein Mikronfilter ist.

## Revendications

1. Le cylindre de vibration, notamment le cylindre de vibration contenant le curseur de vibration (1) placé moyennant le système d'amortissement (2,3) dans le cadre (4) où il y a, dans la cavité (34) du curseur de vibration (1), est disposé le système de vibration (11) qui est placé moyennant au moins un roulement (14) dans la bobine (22) extérieure du curseur (1) tout en sachant que la cavité (34) de la bobine (22) intérieure forme en même temps un bassin (24) de l'huile (25) de graissage servant à graisser des roulements (14) par un brouillard d'huile, **caractérisé par le fait qu'**il contient au moins un système de filtration gravitationnel de l'huile (25) de graissage.

2. Le cylindre de vibration selon la revendication 1, **caractérisé par le fait que** le système de filtration gravitationnel de l'huile (25) de graissage est disposé dans la bobine (22) extérieure.

3. Le cylindre de vibration selon une des revendications précédentes, **caractérisé par le fait que** le système de l'huile (25) de graissage contient au moins un canal (28) liant le bassin (24) de l'huile (25) de graissage avec au moins un filtre (27) de l'huile (25) de graissage.

4. Le cylindre de vibration selon la revendication 3, **caractérisé par le fait que** le canal (28) contient, dans le débouché à l'espace (30) intérieur du filtre (27), une ouverture de versement (36), qui est pourvu de la bordure (32) à dégoutter.

5. Le cylindre de vibration selon une des revendications 3 et 4, **caractérisé par le fait que** le filtre (27) de l'huile (25) de graissage est fixé à l'arbre (13) de contrepoids (12) qui est partie du système de vibration (11).

6. Le cylindre de vibration selon une des revendications 3 jusqu'à 5, **caractérisé par le fait que** le canal (28) contient au moins une chambre (29) disposée au niveau du bassin (24) de l'huile (25) de graissage.

7. Le cylindre de vibration selon une des revendications 3 jusqu'à 6, **caractérisé par le fait que** le canal (28) est disposé dans le couvercle (15) de la bobine (22) intérieure.

8. Le cylindre de vibration selon une des revendications 3 jusqu'à 7, **caractérisé par le fait** le côté libre du filtre (27) est pourvu du parois (31) avec l'ouverture (35).

9. Le cylindre de vibration selon une des revendications 3 jusqu'à 8, **caractérisé par le fait que** le filtre (27) de l'huile (25) de graissage est de micron.
